# EUROPEAN PATENT APPLICATION

(11) **EP 4 296 314 A1**
(43) Date of publication of application: **27.12.2023**
(21) Application number: 22755763.4
(22) Date of filing: 12.01.2022
(51) Int. Cl.: C08L 23/26, B32B 27/32, B65D 65/40, C08L 23/08

(54) **RESIN COMPOSITION AND USE THEREOF**

(30) Priority: 19.02.2021 JP 2021025231
(71) Applicant: Mitsui Chemicals, Inc., Tokyo 104-0028 (JP)
(72) Inventor: YOSHIMOTO, Koya, Shanghai 200070 (CN); SASAKI, Takanori, Ichihara-shi, Chiba 299-0108 (JP); IZAIKE, Yuhei, Ichihara-shi, Chiba 299-0108 (JP)
(74) Representative: Hoffmann Eitle
(86) International application number: PCT/JP2022/000623
(87) International publication number: WO 2022/176437

(57) **Abstract**

An object of the present invention is to obtain a resin composition with favorable high-speed formability, low adhesiveness to chill rolls and guide rolls upon film forming, and excellent adhesiveness to a resin having a polar group (polar resin). The present invention relates to a resin composition including 75 to 100 parts by mass of a propylene-based polymer (A), and 0 to 25 parts by mass of a copolymer (B) of ethylene and at least one α-olefin selected from α-olefins having 3 to 20 carbon atoms, and satisfying prescribed requirements, provided that the sum of the (A) and the (B) is 100 parts by mass, wherein at least a part of the propylene-based polymer (A) is modified with a polar compound, and the resin composition satisfies prescribed requirements.

## Description

### Technical Field

Polyolefin-based resins, such as polyethylene and polypropylene, have been widely used as constituent materials for various food packaging materials because of their excellent formability, hygienic properties, water vapor barrier properties, and low cost.

Since polyolefin-based resins have high gas permeability, they are laminated with polar resins such as an ethylene·vinyl alcohol copolymer (EVOH), polyamide (PA), and polyester (for example, polyethylene terephthalate (PET)), which have gas barrier properties, for the purpose of maintaining freshness of contents and prolonging an expiration date, and then often used as food packaging materials.

The polyolefin-based resins have poor adhesiveness to polar resins, and therefore, for example, graft-modified polyethylene and polypropylene are used as an adhesive layer, or a polyolefin-based resin including, for example, graft-modified polyethylene or polypropylene, is used as the polyolefin-based resins.

Food packaging materials composed of such laminates are produced by melt (co)extrusion, such as a casting method, inflation method, or extrusion coating method. Then, high-speed forming process has been investigated for the purpose of improvement in productivity of food packaging materials, however, a portion of materials constituting the laminate is not compatible with the high-speed forming, thereby causing cases in which productivity of multilayer laminates cannot be improved.

In order to solve the above problem, for example, Patent Literature 1 discloses that a blend of a high melt tension polypropylene-based resin with a polypropylene-based resin improves forming stability of a polypropylene film, however, it describes melt film stability upon inflation molding, and does not refer to high-speed formability.

Patent Literatures 2 and 3 disclose an adhesive resin composition capable of high-speed lamination forming, which is however, an adhesive resin composition with high adhesiveness including a soft propylene-based polymer, and therefore, when a "wraparound phenomenon" occurs whereby the adhesive resin composition wraps around the edge of film upon undergoing coextrusion film forming with polypropylene or EVOH, it may stick to a chill roll and guide roll, which may result in being unable to increase a forming speed.

### Citation List

### Patent Literature

[Patent Literature 1] JP 2003-64193 A
[Patent Literature 2] JP 5915253 B2
[Patent Literature 3] JP 2018-135488 A

### Summary of Invention

### Technical Problem

An object of the present invention is to obtain a resin composition with favorable high-speed formability, low adhesiveness to chill rolls and guide rolls upon film forming, and excellent adhesiveness to resins having polar groups (polar resins), such as an ethylene·vinyl alcohol copolymer (EVOH), polyamide (PA), and polyester, and a laminate suitable for food packaging films including the resin compositions.

### Solution to Problem

The present invention relates to a resin composition including:
75 to 100 parts by mass of a propylene-based polymer (A); and
0 to 25 parts by mass of a copolymer (B) of ethylene and at least one α-olefin selected from α-olefins having 3 to 20 carbon atoms, and satisfying the following requirements (b-1) and (b-2), provided that the sum of the (A) and the (B) is 100 parts by mass,
wherein at least a part of the propylene-based polymer (A) is modified with a polar compound, and
the resin composition satisfies the following requirements (1) to (3):
   (b-1) the content of constituent unit derived from ethylene is 50 to 99 mol% and the content of constituent unit derived from an α-olefin having 3 to 20 carbon atoms is 1 to 50 mol%, provided that the sum of the content of constituent unit derived from ethylene and the content of constituent unit derived from the α-olefin is 100 mol%;
   (b-2) a melt flow rate (MFR; 190°C, 2.16 kg load) as measured in accordance with ASTM D1238 is in the range of 0.1 to 50 g/10 min;

   (1) a melt flow rate (MFR) measured at 230°C and a load of 2.16 kg is in the range of 1 to 100 g/10 min;
   (2) a density is in the range of 0.89 to 0.93 g/cm³;
   (3) a melt tension measured at 230°C is 10.0 mN or less.

### Advantageous Effects of Invention

The resin composition of the present invention has characteristics of having favorable high-speed formability, low adhesiveness to chill rolls and guide rolls upon film forming, and excellent adhesiveness to resins having polar groups (polar resins), such as an ethylene·vinyl alcohol copolymer (EVOH), polyamide (PA), and polyester (for example, polyethylene terephthalate (PET)).

### Description of Embodiments

The resin composition of the present invention is a composition containing a propylene-based polymer (A) and an ethylene·α-olefin copolymer (B) (hereinafter the copolymer is also referred to as "ethylene·α-olefin copolymer (B)").

### <Propylene-based polymer (A)>

The propylene-based polymer (A) that is one of the components of the resin composition of the present invention, can satisfy the following requirements (1) to (4).

### <Requirement (1)>

A melt flow rate (MFR) measured at 230°C and a load of 2.16 kg is in the range of 1 to 100 g/10 min, preferably 1 to 50 g/10 min, and more preferably 1 to 30 g/10 min.

The MFR of the propylene-based polymer (A) satisfying the above range allows a formed product with favorable extrudability and excellent surface appearance to be obtained.

### <Requirement (2)>

A density is in the range of 0.89 to 0.93 g/cm³, preferably 0.89 to 0.92 g/cm³, and more preferably 0.90 to 0.92 g/cm³.

The density of propylene-based polymer (A) satisfying the above range renders low adhesiveness to chill rolls and guide rolls upon film forming and excellent forming stability.

### <Requirement (3)>

A melt tension measured at 230°C is in the range of 10 mN or less and preferably 9.5 mN or less.

The melt tension of propylene-based polymer (A) being 10 mN or less makes it difficult for surging of a melt-extruded melt curtain to occur upon increasing a film drawing rate, resulting in excellent high-speed formability.

### <Requirement (4)>

At least a part of the propylene-based polymer (A) according to the present invention is modified with a polar compound, preferably with an unsaturated carboxylic acid or a derivative thereof (preferably graft-modified).

In the present invention, "at least a part ... is modified with a polar compound" refers to both cases of a mixture (composition) of an unmodified propylene-based polymer and a propylene-based polymer modified with a polar compound, and the propylene-based polymer (A) entirely modified with a polar compound, and the term "at least a part" indicates that the entire propylene-based polymer (A) according to the present invention is not necessarily modified with a polar compound.

The modification amount of the polar compound in the propylene-based polymer (A) according to the present invention (the grafting amount of polar compound) is in the range of 0.01 to 10% by mass, more preferably 0.02 to 5% by mass, and more preferably 0.04 to 1% by mass.

The propylene-based polymer (A) according to the present invention may be entirely a propylene-based polymer (A) modified with a polar compound, or may be a mixture (composition) of a propylene-based polymer modified with a polar compound and an unmodified propylene-based polymer; and in the case of the mixture, the mixture is required to satisfy the modification amount of the polar compound in the mixture within the above range.

When the propylene-based polymer (A) according to the present invention is a mixture of a propylene-based polymer modified with a polar compound and an unmodified propylene-based polymer, the mixture preferably satisfies the requirements (1) to (3) above, and more preferably the following requirements (5) to (7), and the propylene-based polymer modified with a polar compound or the unmodified propylene-based polymer is not necessarily required to satisfy all of the requirements (1) to (3) above and (5) to (7) below.

Moreover, when the propylene-based polymer (A) according to the present invention is a mixture of a propylene-based polymer modified with a polar compound and an unmodified propylene-based polymer, the amounts of propylene-based polymer modified with a polar compound and unmodified propylene-based polymer are not particularly limited and can be appropriately determined according to the degree of the modified amount of propylene-based polymer with a polar compound.

The propylene-based polymer (A) according to the present invention satisfying the modified amount within the above range thereby yields a resin composition with excellent adhesiveness to polar resins such as an ethylene·vinyl alcohol copolymer (EVOH), polyamide (PA), and polyester, and provides a formed product with less content of foreign substances such as fish eyes and black spots upon melt-extrusion.

A method of adjusting the modified amount of propylene-based polymer (A) according to the present invention within the above range can employ a method in which the propylene-based polymer is modified with a polar compound to adjust the modified amount within the above range, or a method of mixing a propylene-based polymer, the modified amount of which was preliminarily increased, with an unmodified propylene-based polymer to adjust the modified amount within the above range, and obtaining a propylene-based polymer (A).

A method of modifying the propylene-based polymer according to the present invention can employ various known methods, for example, dissolving the propylene-based polymer in an organic solvent, then adding to the resulting solution, a polar compound such as an unsaturated carboxylic acid or a derivative thereof, and a radical initiator such as an organic peroxide if necessary, and reacting usually at a temperature of 60 to 350°C and preferably 80 to 190°C, for 0.5 to 15 hours and preferably 1 to 10 hours, or a method of adding the propylene-based polymer, an unsaturated carboxylic acid or a derivative thereof, and a radical initiator such as an organic peroxide if necessary, in the absence of solvent by using such as an extruder, and reacting the mixture usually at or above a melting point of the propylene-based polymer and preferably at 160 to 350°C for 0.5 to 10 minutes.

The graft modification amount of propylene-based polymer (A) is determined by measuring the amount of constituent unit derived from a polar compound such as an unsaturated carboxylic acid or its derivative (graft modification amount) as an intensity of the peak (1790 cm⁻¹ when maleic anhydride is used) derived from the constituent unit with an infrared absorption analyzer, and quantifying the intensity using a calibration curve preliminarily prepared.

The propylene-based polymer (A) according to the present invention preferably satisfies the following requirement (5).

### <Requirement (5)>

The propylene-based polymer (A) according to the present invention preferably has a melt tension measured at 250°C in the range of 7 mN or less, more preferably 6.9 mN or less, and further preferably 6.8 mN or less.

The propylene-based polymer (A) satisfying a melt tension measured at 250°C within the above range is unlikely to cause surging of a melt-extruded melt curtain upon increasing a film drawing rate, resulting in excellent high-speed formability.

A melt tension of the propylene-based polymer (A) according to the present invention was measured by the following method.

The propylene-based polymer (A) was melt-extruded at set temperatures of 230°C and 250°C and a piston travel rate of 15 m/min using a Capillograph 1D (cylinder diameter 9.55 mm, cylinder effective length 250 mm) using an orifice with a nozzle diameter of 2.095 mm and length of 8.0 mm, manufactured by Toyo Seiki Seisaku-sho, Ltd. and the extruded strands were drawn at a drawing rate of 15 m/min for a certain period of time, and an average melt tension during the measurement time was determined as the melt tension (mN).

The propylene-based polymer (A) according to the present invention preferably satisfies the following requirement (6).

### <Requirement (6)>

The propylene-based polymer (A) according to the present invention preferably has a crystallization peak measured by a differential scanning calorimeter (DSC) in the range of 120 to 135°C, more preferably 120 to 132°C, and further preferably 120 to 130°C.

The propylene-based polymer (A) having the crystallization peak satisfying the above range facilitates proceeding of solidification of a melt-extruded melt curtain upon film forming, and has excellent forming stability.

The propylene-based polymer (A) according to the present invention preferably satisfies the following requirement (7).

### <Requirement (7)>

The propylene-based polymer (A) according to the present invention preferably has a difference between the crystallization peak measured by a differential scanning calorimeter (DSC) and the melting peak in the range of 35°C or more, more preferably 36°C or more, and further preferably 37°C or more.

The propylene-based polymer (A) satisfying the difference between the crystallization peak and the melting peak within the above range has excellent adhesiveness to polar resins such as an ethylene·vinyl alcohol copolymer (EVOH), polyamide (PA), and polyester.

The methods of measuring a crystallization temperature (the crystallization peak) and a melting point (the melting peak) of the propylene-based polymer (A) according to the present invention will be described below.

The propylene-based polymers (A) according to the present invention include a propylene homopolymer or a copolymer of propylene and at least one α-olefin having 2 to 20 carbon atoms other than propylene. Here, examples of α-olefin having 2 to 20 carbon atoms other than propylene include ethylene, 1-butene, 1-pentene, 1-hexene, 4-methyl-1-pentene, 1-octene, 1-decene, 1-dodecene, 1-tetradecene, 1-hexadecene, 1-octadecene and 1-eicosene, and ethylene or α-olefin having 4 to 10 carbon atoms are preferred.

Copolymers of propylene and these α-olefins may be random copolymers or block copolymers. Constituent units derived from these α-olefins can be included in a copolymer of α-olefin and propylene at a proportion of 35 mol% or less and preferably 30 mol% or less.

The propylene-based polymer (A) according to the present invention is not limited to one type thereof and may be a mixture (composition) of two or more types thereof. When the propylene-based polymer (A) according to the present invention is a composition of the two or more types, the composition preferably satisfies the above requirements.

Methods of producing the propylene-based polymer (A) according to the present invention are not particularly limited, and include well-known methods using well-known catalysts such as Ziegler-Natta catalysts and metallocene-based catalysts.

The propylene-based polymer (A) according to the present invention may have either an isotactic structure or a syndiotactic structure, and the either structure can be selected in consideration of compatibility with the ethylene·α-olefin copolymer (B) described below.

### <Ethylene·α-olefin copolymer (B)>

The ethylene·α-olefin copolymer (B) that is another component of the components constituting the resin composition of the present invention, is a copolymer of ethylene and at least one α-olefin selected from α-olefins having 3 to 20 carbon atoms, and satisfying the following requirements (b-1) and (b-2).

### <Requirement (b-1)>

The content of constituent unit derived from ethylene is in the range of 50 to 99 mol%, preferably 70 to 95 mol%, and more preferably 75 to 90 mole%, and the content of constituent unit derived from an α-olefin having 3 to 20 carbon atoms is in the range of 1 to 50 mol%, preferably 5 to 30 mol%, and more preferably 10 to 25 mol%, provided that the sum of the content of constituent unit derived from ethylene and the content of constituent unit derived from the α-olefin is 100 mol%.

Satisfying the content of constituent unit derived from ethylene within the above range allows a resin composition containing the ethylene·α-olefin copolymer (B) to have favorable high-speed formability and low adhesiveness to chill rolls and guide rolls upon film forming.

### <Requirement (b-2)>

A melt flow rate as measured in accordance with ASTM D1238 (MFR; 190°C, 2.16 kg load) is in the range of 0.1 to 50 g/10 min, preferably 0.1 to 35 g/10 min, and more preferably 1 to 35 g/10 min.

Methods of producing the ethylene·α-olefin copolymer (B) according to the present invention are not particularly limited and include well-known methods using well-known catalysts such as Ziegler-Natta catalysts and metallocene-based catalysts.

### <<Composition of propylene-based polymer (A) and ethylene·α-olefin copolymer (B)>>

A content ratio of constituent unit derived from α-olefin and constituent units derived from propylene, in the propylene-based polymer (A), and a content ratio of constituent units derived from α-olefin and constituent units derived from ethylene in the ethylene·α-olefin copolymer (B) were quantified by ¹³C-NMR using the following apparatus and conditions.

A JECX400P nuclear magnetic resonance apparatus manufactured by JEOL Ltd., was used, a mixed solvent of heavy-ortho-dichlorobenzene/heavy benzene (80/20% by volume) was used as a solvent, a sample concentration of 60 mg/0.6 mL, and the conditions of a measurement temperature of 120°C, an observation core of ¹³C (100 MHz), a sequence of single-pulse proton decoupling, a pulse width of 4.62 µsec (45° pulse), a repetition time of 5.5 sec, cumulative number of 8,000, and a reference value for chemical shift of 29.73 ppm, were employed.

### <Resin composition>

The resin composition of the present invention is a composition including 75 to 100 parts by mass, preferably 80 to 100 parts by mass, and more preferably 90 to 100 parts by mass, of the aforementioned propylene-based polymer (A), and 0 to 25 parts by mass, preferably 0 to 20 parts by mass, and more preferably 0 to 10 parts by mass, of the aforementioned ethylene·α-olefin copolymer (B), provided that the sum of the (A) and the (B) is 100 parts by mass.

When the above propylene-based polymer (A) contained in the resin composition of the present invention is a mixture of a propylene-based polymer modified with a polar compound and an unmodified propylene-based polymer, the amount of propylene-based polymer modified with a polar compound in the above propylene-based polymer (A) is usually 1 to 25 parts by mass or 1 to 25% by mass, preferably 2 to 20 parts by mass or 2 to 20% by mass, and more preferably 3 to 15 parts by mass or 3 to 15% by mass.

Furthermore, the resin composition of the present invention satisfies the following requirements (1) to (3).

### <Requirement (1)>

A melt flow rate (MFR) measured at a temperature of 230°C and a load of 2.16 kg is in the range of 1 to 100 g/10 min, preferably 1 to 50 g/10 min, and more preferably 1 to 30 g/10 min.

Satisfying the MFR of the resin composition within the above range allows a formed product with favorable extrudability and excellent surface appearance to be obtained.

### <Requirement (2)>

The density is in the range of 0.89 to 0.93 g/cm³, preferably 0.89 to 0.92 g/cm³, and more preferably 0.90 to 0.92 g/cm³.

Satisfying the density of the resin composition within the above range allows a resin composition having low adhesiveness to chill rolls and guide rolls upon film forming and excellent forming stability to be obtained.

### <Requirement (3)>

A melt tension measured at 230°C is in the range of 10 mN or less or 10.0 mN or less, preferably 9.5 mN or less, and more preferably 9.1 mN or less.

The melt tension of the resin composition satisfying the above range is unlikely to cause surging of a melt-extruded melt curtain upon film forming, thereby providing a resin composition with excellent high-speed formability.

The melt tension of the resin composition measured at 230°C can be controlled by for example, changing the compounding amounts of propylene-based polymer (A), which has a likelihood of a relatively low melt tension, and an ethylene·α-olefin copolymer (B), which has a likelihood of a relatively high melt tension, changing the compounding amount of each propylene-based polymer in the case of a composition with the two or more propylene-based polymers (A), or changing the presence or absence, amount added or type, of the crystal nucleating agent, as described below.

The resin composition of the present invention preferably satisfies the following requirement (4).

### <Requirement (4)>

The resin composition of the present invention preferably has a melt tension measured at 250°C of 7 mN or less or 7.0 mN or less, more preferably 6.9 mN or less, and further preferably 6.8 mN or less.

The resin composition satisfying the melt tension measured at 250°C within the above range is unlikely to cause surging of a melt-extruded melt curtain upon film forming, resulting in excellent high-speed formability.

The melt tension of the resin composition measured at 250°C can be controlled by the same method as that of controlling a melt tension of a resin composition measured at 230°C.

Note that a melt tension of the resin composition of the present invention can be measured by the same method as the aforementioned method of measuring the melt tension of the propylene-based polymer (A).

The resin composition of the present invention preferably satisfies the following requirement (5).

### <Requirement (5)>

In the resin composition of the present invention, a crystallization peak derived from the propylene-based polymer (A) as measured by a differential scanning calorimeter (DSC) is preferably in the range of 120 to 135°C, more preferably 120 to 132°C, and further preferably 120 to 130°C.

The resin composition with the crystallization peak satisfying the above range facilitates proceeding of solidification of a melt-extruded melt curtain upon film forming, and has excellent forming stability.

The resin composition of the present invention preferably satisfies the following requirement (6).

### <Requirement (6)>

In the resin composition of the present invention, a difference between the crystallization peak derived from the propylene-based polymer (A) and the melting peak derived from the propylene-based polymer (A) as measured by a differential scanning calorimeter (DSC), expressed by the following formula, is preferably 35°C or more, more preferably 36°C or more, and further preferably 37°C or more.

[The melting peak (°C) derived from the propylene-based polymer (A)] - [The crystallization peak (°C) derived from the propylene-based polymer (A)]

The resin composition satisfying the difference between the crystallization peak and the melting peak within the above range has excellent adhesiveness to polar resins such as an ethylene·vinyl alcohol copolymer (EVOH), polyamide (PA), and polyester.

Note that the crystallization temperature (crystallization peak) and melting point (melting peak) of the resin composition of the present invention are measured by the same method as the aforementioned method of measuring the crystallization temperature (crystallization peak) and the melting point (melting peak) of the propylene-based polymer (A).

The resin composition of the present invention preferably contains a crystal nucleating agent in addition to the aforementioned propylene-based polymer (A) and the aforementioned ethylene·α-olefin copolymer (B).

Specific examples of the crystal nucleating agent that can be added to the resin composition of the present invention include sodium benzoate, bisbenzylidene sorbitol, bis(p-methylbenzylidene)sorbitol, bis(p-ethylbenzylidene)sorbitol, sodium-2,2-methylene bis(4,6-di-t-butylphenyl)phosphite, talc, titanium dioxide, aluminum hydroxy-di-p-t-butyl benzoate, aromatic phosphates, aromatic carboxylic acids, nonitol-based nucleating agents such as 7,8,9 -trideoxy-3,5:45-bis-O-[(R)-propylphenyl)methylene]-D-glycero-L-gulo-nonitol, and rosin-based nucleating agents, and they can be used singly or in admixture of two or more types thereof.

In a case in which the resin composition of the present invention contains the crystal nucleating agent, the amount thereof is 0.4 parts or less relative to 100 parts by mass of the total of the propylene-based polymer (A) and the ethylene·α-olefin copolymer (B).

The resin composition containing the crystal nucleating agent has excellent high-speed formability due to a high solidification rate of a melt-extruded melt curtain. Moreover, a formed product with excellent transparency can be obtained. Furthermore, the resin composition containing the crystal nucleating agent has a likelihood of lower melt tension than that without the crystal nucleating agent.

The resin composition of the present invention may contain, in addition to the crystal nucleating agents, known additives as required, such as antioxidants, UV absorbers, neutralizers, light stabilizers, antistatic agents, antiblocking agents, lubricants, odor adsorbents, antibacterial agents, pigments, inorganic and organic fillers, as well as various synthetic resins, as long as the purpose of the present invention is not impaired.

Regarding the resin composition of the present invention, the resin composition alone can be used for, for example, sheets, films, or hollow formed products, for example, by known thermoforming methods such as calendering, extrusion, injection molding, inflation molding, blow molding, extrusion blow molding, injection blow molding, press molding, vacuum forming, and expansion molding.

Further, the resin composition of the present invention can also be laminated (bonded) with a base material to form a laminate.

### <Base material>

Base materials that can be laminated with the resin composition of the present invention are not particularly limited, for example, as long as they are in forms of sheets, films, trays, or containers that can be used as laminates. Examples of the base material include thermoplastic resin films such as films formed of polyesters represented by polyethylene terephthalate and polyethylene naphthalate, polycarbonate films, polyamide films formed of such as nylon 6 and nylon 66, ethylene·vinyl alcohol copolymer films, polyvinyl alcohol films, polyvinyl chloride films, and polyvinylidene chloride films, or sheets made of such thermoplastic resins, and further trays or cup-shaped containers in which sheets underwent thermoforming, shaped articles composed of such as aluminum foils and paper.

Moreover, the thermoplastic resin film may be a non-stretched film, an uniaxially or biaxially stretched film.

The base materials of thermoplastic resins can be formed into laminates by various known methods, such as a method of co-extruding the resin composition of the present invention and a thermoplastic resin to form a laminate; a method of extruding and coating (extrusion lamination) the resin composition of the present invention onto a film or sheet of the thermoplastic resin preliminarily obtained, to form a laminate; and a method of bonding (dry-laminating) a film or sheet of the thermoplastic resin preliminarily obtained, with a film or sheet of the resin composition of the present invention to form a laminate. Among the methods of obtaining laminates, preferable is the method of co-extruding the resin composition of the present invention and a thermoplastic resin to form a laminate.

### <<Uses>>

Laminates including the resin compositions of the present invention include various known applications, for example, those in the food field, such as food packaging films, cups, bottles, trays, tubes, and food containers such as BIB (back-in-box), and those in the non-food field. Further, when using as base materials, films formed of polyesters represented by polyethylene terephthalate and polyethylene naphthalate, polycarbonate films, polyamide films formed of such as nylon 6 and nylon 66, ethylene·vinyl alcohol copolymer films, polyvinyl alcohol films, the laminates also have excellent gas barrier properties.

### (Packaging material)

The laminates containing the resin compositions of the present invention can also be used as packaging materials. The packaging material can be suitably used as materials (packaging materials) for such as food and beverage, cosmetics, miscellaneous goods, and for packaging containers and packaging bags in food packaging, filling packaging and textile packaging.

A packaging container and a packaging bag may be obtained by molding a film or sheet laminate into a desired shape by vacuum forming or pressure forming, or by producing the laminate so that it is formed into a desired shape of a packaging container and a packaging bag.

A packaging container and a packaging bag with contents packaged are obtained, for example, by filling the container and bag with contents, then covering them with known films as lid materials and heat-sealing the top or side of the container. The containers and bags are suitably used for packaging such as instant noodles, miso, jelly, pudding and snacks.

### Examples

The present invention will be more specifically described based on Examples, however, the present invention is not limited in any way to these Examples.

The propylene-based polymer (A) and the ethylene·α-olefin copolymer (B) used in Examples and Comparative Examples will be described below. Incidentally, all of these polyolefins were prepared by polymerization according to the usual methods, unless otherwise specified.

### (1) Propylene-based polymer (A)

The propylene-based polymers (A) used in Examples and Comparative Examples were used by appropriately mixing a PP-1, PP-2, and modified PP below.

### (1-1) PP-1: Homopolypropylene (propylene homopolymer)

MFR = 7 g/10 min, density 0.90 g/cm³.

### (1-2) PP-2: Homopolypropylene (propylene homopolymer)

MFR = 3 g/10 min, density 0.90 g/cm³.

### (1-3) Modified PP: Maleic anhydride-modified homopolypropylene

MFR = 100 g/10 min, density 0.90 g/cm³, grafting amount of maleic anhydride 1.0% by mass.

### (2) Ethylene·α-olefin copolymer (B)

### (2-1) EBR: Ethylene·1-butene copolymer

MFR = 4 g/10 min, density 0.89 g/cm³, ethylene content = 88 mol%, 1-butene content = 12 mol%.

A crystal nucleating agent, product name: Millad NX8000 (nonitol-based crystal nucleating agent) manufactured by MILLIKEN & CO LIMITED, was used.

### [Measurement conditions for physical properties]

### <Melt flow rate (MFR)>

A MFR was measured in accordance with ASTM D 1238 at 230°C under a load of 2.16 kg for propylene-based polymers and at 190°C under a load of 2.16 kg for ethylene-based polymers.

### <Density>

A density was measured in accordance with JIS K7112 (density gradient tube method).

### <Composition of ethylene·α-olefin copolymer>

The content ratio of constituent units derived from α-olefin and constituent units derived from ethylene in the ethylene ·a-olefin copolymer was quantified by ¹³C-NMR using the following apparatus and conditions.

A JECX400P nuclear magnetic resonance apparatus manufactured by JEOL Ltd., was used, a mixed solvent of heavy-ortho-dichlorobenzene/heavy benzene (80/20% by volume) was used as a solvent, a sample concentration of 60 mg/0.6 mL, and the conditions of a measurement temperature of 120°C, an observation core of ¹³C (100 MHz), a sequence of single-pulse proton decoupling, a pulse width of 4.62 psec (45° pulse), a repetition time of 5.5 sec, cumulative number of 8,000, and a reference value for chemical shift of 29.73 ppm, were employed.

### <Crystallization temperature and melting point>

The crystallization temperature and melting point were measured using a differential scanning calorimeter (DSC) as follows. Approximately 5 mg of sample was sealed in an aluminum pan and heated from room temperature to 230°C at 10°C/min, and the sample was held at 230°C for 10 minutes to completely melt it. The sample was then cooled to -20°C at 10°C/min, stayed at -20°C for 10 minutes, and then heated again to 230°C at 10°C/min. The peak temperature detected in the cooling test was adopted as a crystallization temperature (Tc), and the peak temperature in this second heating test as a melting point (Tm).

### <Graft modification amount>

The amount of constituent unit derived from an unsaturated carboxylic acid and/or its derivative (graft modification amount) was determined by measuring an intensity of the peak (1790 cm⁻¹ in the case of maleic anhydride) derived from the aforementioned constituent units using an infrared absorption analyzer, and quantifying the intensity using a calibration curve preliminarily prepared.

### <Film formability>

The resin compositions obtained in Examples and Comparative Examples by the following method were each extruded at 240°C using an extruder with a T-die (film forming machine), using a screw with a diameter of 40 mm and an effective length of L/D = 26, and drawn through a chill roll set at 25°C to form a single layer film with a thickness of 40 um. The single-layer film was formed under the three conditions of drawing rates of 5 m/min, 10 m/min, and 20 m/min, respectively to determine formability according to the following two criteria.

### Surging of T-die extruded molten resin film

Formability O: No surging occurred in the film width direction.
Formability △: Surging slightly occurred in the film width direction.
Formability ×: Surging occurred in the film width direction.

### Adhesiveness to chill roll

Formability ○: No delamination mark occurred on the film surface when passing through a chill roll.
Formability △: Delamination mark slightly occurred on the film surface when passing through a chill roll.
Formability ×: Delamination mark significantly occurred on the film surface when passing through a chill roll.

### <Fabrication of laminate>

A laminate (laminate film) composed of an ethylene·vinyl alcohol copolymer (EVAL F101A, MFR (190°C, 2.16 kg) = 1.6 g/10 min, manufactured by Kuraray Co., Ltd.), each of resin compositions obtained in Examples and Comparative Examples, and polypropylene (Prime Polypro F327, MFR = 7, manufactured by Prime Polymer Co., Ltd.), was fabricated by co-extrusion using a three-type-three-layer T-die forming machine (multilayer film forming machine). The ethylene·vinyl alcohol copolymer was extruded at 220°C using a screw with a diameter of 40 mm and an effective length of L/D = 26, the resin composition was extruded at 240°C using a screw with a diameter of 40 mm and an effective length of L/D = 26, and the polypropylene was extruded at 240°C using a screw with a diameter of 50 mm and an effective length of L/D = 28. The T-die was set at 220°C. The screw rotation speed was appropriately adjusted, and a laminate of ethylene·vinyl alcohol copolymer/resin composition/polypropylene = 40/40/160 µm was fabricated at a drawing rate of 5 m/min.

### <Adhesive strength of laminate>

The adhesive strength (unit: N/15 mm) of the resulting laminate was measured at room temperature at 23°C by a T-peel method using a tensile testing machine. The crosshead rate was 300 mm/min.

### [Example 1]

The above PP-1 (60 parts by mass), the above PP-2 (36 parts by mass), and the above modified PP (4 parts by mass) as the propylene-based polymer (A) were melt-kneaded at 230°C using a single screw extruder to obtain a resin composition 1.

Note that the graft modification amount of propylene-based polymer (A) in the resin composition 1 is 0.04% by mass.

### [Examples 2 to 5 and Comparative Examples 1 to 3]

In Examples 2 to 5 and Comparative Examples 1 to 3, resin compositions were produced in the same manner as in Example 1 according to the compounding formulations shown in Tables 1 and 2, respectively.

The composition obtained in Example 2 is a resin composition 2, and the graft modification amount of propylene-based polymer (A) in the resin composition 2 is 0.08% by mass.

The composition obtained in Example 3 is a resin composition 3, and the graft modification amount of propylene-based polymer (A) in the resin composition 3 is 0.04% by mass.

The composition obtained in Example 4 is a resin composition 4, and the graft modification amount of propylene-based polymer (A) in the resin composition 4 is 0.04% by mass.

The composition obtained in Example 5 is a resin composition 5, and the graft modification amount of propylene-based polymer (A) in the resin composition 5 is 0.09% by mass.

The composition obtained in Comparative Example 1 is a resin composition 6, and the graft modification amount of propylene-based polymer (A) in the resin composition 6 is 0.04% by mass.

The composition obtained in Comparative Example 2 is a resin composition 7 and the graft modification amount of propylene-based polymer (A) in the resin composition 7 is 0.04% by mass.

The composition obtained in Comparative Example 3 is a resin composition 8, and the graft modification amount of propylene-based polymer (A) in the resin composition 8 is 0.04% by mass.

The MFR, density, melting point, and crystallization temperature of each of the resin compositions obtained in Examples and Comparative Examples, the evaluation results of the formability of each monolayer film of these resin compositions, and the evaluation results of the adhesive strength of each laminate obtained from these resin compositions are shown in Tables 1 and 2.

**[Table 1]**

| | | | | Example 1 | Example 2 | Example 3 | Example 4 | Example 5 |
|---|---|---|---|---|---|---|---|---|
| Composition | Propylene-based polymer (A) | PP-1 | Parts by mass | 60 | 46 | 60 | 50 | 36 |
| | | PP-2 | Parts by mass | 36 | 46 | 36 | 36 | 46 |
| | | Modified PP | Parts by mass | 4 | 8 | 4 | 4 | 8 |
| | Ethylene•a-olefin copolymer (B) | EBR | Parts by mass | | | | 10 | 10 |
| | Others | Crystal nucleating agent | Parts by mass | | | 0.2 | 0.4 | 0.4 |
| Resin physical properties | MFR | | g/10 min | 6.0 | 5.9 | 6.2 | 6.3 | 6.3 |
| | Density | | g/cm³ | 0.91 | 0.91 | 0.91 | 0.91 | 0.91 |
| | Melt tension (230°C) | | mN | 8.0 | 8.5 | 8.4 | 9.0 | 9.1 |
| | Melt tension (250°C) | | mN | 5.6 | 5.8 | 6.0 | 6.5 | 6.8 |
| | Crystallization temperature | | °C | 121 | 120 | 127 | 132 | 130 |
| | Melting point | | °C | 163 | 162 | 165 | 166 | 165 |
| | (Melting point) - (Crystallization temperature) | | °C | 42 | 42 | 38 | 34 | 35 |
| Formability | Surging of T-die extruded molten resin film | Drawing rate of 5 m/min | - | ○ | ○ | ○ | ○ | ○ |
| | | Drawing rate of 10 m/min | - | ○ | ○ | ○ | ○ | ○ |
| | | Drawing rate of 20 m/min | - | ○ | ○ | ○ | ○ | ○ |
| | Adhesiveness to chill roll | Drawing rate of 5 m/min | - | ○ | ○ | ○ | ○ | ○ |
| | | Drawing rate of 10 m/min | - | ○ | ○ | ○ | ○ | ○ |
| | | Drawing rate of 20 m/min | - | ○ | ○ | ○ | ○ | ○ |
| Adhesive strength | EVOH adhesive strength | | N/15 mm | 5.0 | 9.0 | 4.0 | 5.0 | 10.0 |

**[Table 2]**

| | | | | Comparative Example 1 | Comparative Example 2 | Comparative Example 3 |
|---|---|---|---|---|---|---|
| Composition | Propylene-based polymer (A) | PP-1 | Parts by mass | 50 | 50 | 45 |
| | | PP-2 | Parts by mass | 36 | 36 | 25 |
| | | Modified PP | Parts by mass | 4 | 4 | 4 |
| | Ethylene•α-olefin copolymer (B) | EBR | Parts by mass | 10 | 10 | 26 |
| | Others | Crystal nucleating agent | Parts by mass | - | 0.2 | - |
| Resin physical properties | MFR | | g/10 min | 6.2 | 6.0 | 6.0 |
| | Density | | g/cm³ | 0.90 | 0.91 | 0.90 |
| | Melt tension (230°C) | | mN | 10.1 | 10.1 | 15.3 |
| | Melt tension (250°C) | | mN | 7.5 | 7.0 | 10.8 |
| | Crystallization temperature | | °C | 119 | 128 | 117 |
| | Melting point | | °C | 163 | 165 | 163 |
| | (Melting point) - (Crystallization temperature) | | °C | 44 | 37 | 46 |
| Formability | Surging of T-die extruded molten resin film | Drawing rate of 5 m/min | - | ○ | ○ | ○ |
| | | Drawing rate of 10 m/min | - | △ | ○ | × |
| | | Drawing rate of 20 m/min | - | × | △ | × |
| | Adhesiveness to chill roll | Drawing rate of 5 m/min | - | ○ | ○ | ○ |
| | | Drawing rate of 10 m/min | - | ○ | ○ | △ |
| | | Drawing rate of 20 m/min | - | △ | ○ | × |
| Adhesive strength | EVOH adhesive strength | | N/15 mm | 12.0 | 8.0 | 15.0 |

## Claims

1. A resin composition comprising:
75 to 100 parts by mass of a propylene-based polymer (A); and
0 to 25 parts by mass of a copolymer (B) of ethylene and at least one α-olefin selected from α-olefins having 3 to 20 carbon atoms, and satisfying the following requirements (b-1) and (b-2), provided that a sum of the (A) and the (B) is 100 parts by mass,
wherein at least a part of the propylene-based polymer (A) is modified with a polar compound, and
the resin composition satisfies the following requirements (1) to (3):
(b-1) a content of constituent unit derived from ethylene is 50 to 99 mol% and a content of constituent unit derived from an α-olefin having 3 to 20 carbon atoms is 1 to 50 mol%, provided that a sum of the content of constituent unit derived from ethylene and the content of constituent unit derived from the α-olefin is 100 mol%;
(b-2) a melt flow rate (MFR; 190°C, 2.16 kg load) as measured in accordance with ASTM D 1238 is in a range of 0.1 to 50 g/10 min;
(1) a melt flow rate (MFR) measured at 230°C and a load of 2.16 kg is in a range of 1 to 100 g/10 min;
(2) a density is in a range of 0.89 to 0.93 g/cm³;
(3) a melt tension measured at 230°C is 10.0 mN or less.

2. The resin composition according to claim 1, wherein the resin composition comprises 90 to 100 parts by mass of the propylene-based polymer (A) and 0 to 10 parts by mass of the copolymer (B), provided that a sum of the (A) and the (B) is 100 parts by mass.

3. The resin composition according to claim 1 or 2, wherein an amount of the propylene-based polymer modified with a polar compound in the propylene-based polymer (A) is in a range of 1 to 25% by mass.

4. The resin composition according to any one of claims 1 to 3, wherein the polar compound modifying the propylene-based polymer (A) is an unsaturated carboxylic acid or a derivative thereof.

5. The resin composition according to any one of claims 1 to 4, wherein the resin composition has a melt tension measured at 250°C of 7.0 mN or less.

6. The resin composition according to any one of claims 1 to 5, wherein a crystallization peak derived from the propylene-based polymer (A) as measured by a differential scanning calorimeter (DSC) is in a range of 120 to 135°C.

7. The resin composition according to any one of claims 1 to 6, wherein a difference between the crystallization peak derived from the propylene-based polymer (A) and a melting peak derived from the propylene-based polymer (A) as measured by a differential scanning calorimeter (DSC), expressed by the following formula, is 35°C or more:
(the melting peak (°C) derived from the propylene-based polymer (A)) - (the crystallization peak (°C) derived from the propylene-based polymer (A)).

8. The resin composition according to any one of claims 1 to 7, wherein the resin composition is a resin composition comprising a crystal nucleating agent.

9. The resin composition according to claim 8, wherein an amount of the crystal nucleating agent is 0.4 parts by mass or less, relative to 100 parts by mass of a total amount of the propylene-based polymer (A) and the ethylene·α-olefin copolymer (B).

10. The resin composition according to claim 8 or 9, wherein the crystal nucleating agent is a nonitol-based crystal nucleating agent.

11. A laminate comprising a layer comprising the resin composition according to any one of claims 1 to 10.

12. The laminate according to claim 11, wherein the laminate is a food packaging film.
